# EUROPÄISCHE PATENTSCHRIFT

(11) **EP 3 795 350 B1**
(45) Veröffentlichungstag und Bekanntmachung des Hinweises auf die Patenterteilung: **29.07.2026**
(21) Anmeldenummer: 20192512.0
(22) Anmeldetag: 24.08.2020
(51) Int. Cl.: B32B 25/10, B32B 1/08, B32B 5/02, B32B 25/16, B32B 25/18

(54) **UMLAGESCHLAUCH, INSBESONDERE ZUR VERWENDUNG ALS SCR-SCHLAUCH**
HOSE, IN PARTICULAR FOR USE AS A SCR HOSE
TUYAU DE PRÉLÈVEMENT, EN PARTICULIER DESTINÉ À L'UTILISATION COMME TUYAU SCR

(30) Priorität: 18.09.2019 DE 102019214183; 14.10.2019 DE 102019215777
(43) Veröffentlichungstag der Anmeldung: 24.03.2021
(73) Patentinhaber: ContiTech Techno-Chemie GmbH, 61184 Karben (DE)
(72) Erfinder: Brühne, Klaus - c/o Continental AG, 30419 Hannover (DE); Schmelter, Klaus - c/o Continental AG, 30419 Hannover (DE); Döring, Lars - c/o Continental AG, 30419 Hannover (DE)
(74) Vertreter: Bird & Bird LLP - Hamburg

(56) Entgegenhaltungen:
- WO-A1-2015/022104
- WO-A1-2017/092894
- DE-A1- 102018 214 615
- US-A1- 2003 178 081

## Beschreibung

Die Erfindung betrifft einen Umlageschlauch, der insbesondere bei hohen Temperaturen und als SCR-Schlauch zum Einsatz kommt.

Umlageschläuche sind flexible Schläuche, die mit einer äußeren Lage aus Festigkeitsträgern, der so genannten Umlage, versehen sind. Innerhalb der umhüllenden äußeren Lage können derartige Schläuche mehrere Lagen oder Schichten aus unterschiedlichen, Elastomeren, thermoplastischen Elastomeren oder Thermoplasten und Festigkeitsträgern aufweisen. Die äußere Lage aus Festigkeitsträgern kann als Geflecht, Gestrick, Gewirke, Gewebe oder dergleichen vorliegen. Textil-Umlageschläuche werden häufig im Niederdruckbereich und / oder im Niedertemperaturbereich (<150°C), z. Bsp. als Kraftstoff-. Öl-, oder Kompressorschläuche eingesetzt. Ein derartiger Umlageschlauch ist beispielweise in WO2014/019796A1 beschrieben.

So genannte SCR-Systeme werden in Nutzfahrzeugen wie Lkws und Omnibussen und teilweise auch für Pkws in der Praxis eingesetzt. Hierfür wird eine ungefähr 32,5-prozentige wässrige Harnstofflösung verwendet, deren Spezifikationen in Normen wie ISO 22241 und DIN 70070 festgelegt sind und die in Europa unter der Bezeichnung AdBlue^{®} vertrieben wird. In Nordamerika wird die Bezeichnung Diesel Exhaust Fluid (DEF) verwendet. Die selektive katalytische Reduktion (SCR, selective catalytic reduction) bezeichnet dabei eine Technik zur Reduktion von Stickoxiden in Abgasen, z.B. von Feuerungsanlagen, Müllverbrennungsanlagen, Gasturbinen, Industrieanlagen und Motoren. Hierfür wird ein sogenannter SCR-Katalysator eingesetzt, mit dem Stickoxide selektiv reduziert werden können. Für die Reaktion wird Ammoniak benötigt, das dem Abgas z.B. in Form einer Harnstofflösung zugemischt wird.

In Europa und auch andernorts müssen Fahrzeuge immer strengere Abgasnormen erfüllen. Für die Abgasnachbehandlung von Fahrzeugmotoren, insbesondere Dieselmotoren, wurde daher ein auf dem SCR-Verfahren basierendes System zur Reduktion von Stickoxiden im Abgas entwickelt. Hierbei werden im Abgas vorhandene Stickoxide mit Hilfe einer Harnstofflösung und des SCR-Katalysators in Wasserdampf und Stickstoff umgewandelt. Die flüssige Harnstofflösung muss dabei in einem separaten Tank mitgeführt werden und wird im Betrieb mittels einer Schlauchleitung über eine Dosiereinheit in das Abgas eingespritzt. Ein derartiger SCR-Schlauch ist zum Beispiel in WO2015/022104A1 beschrieben.

Hierbei ist zwischen einer inneren Festigkeitsträgerlage und dem Außengummi ein Heizleiter angeordnet. Derartige Schlauchkonstruktionen haben allerdings häufig ein hohes Gewicht und eine dicke Wandkonstruktion, was die Flexibilität des Schlauches deutlich beeinträchtigt. WO 2015/022104 A1 offenbart beispielsweise SCR-Schläuche welche eine innere Kautschuklage und äußere Textilgeflechtlagen aufweisen. US 2003/178081 A1 offenbart Umlageschläche zum Transport von Brennstoffen welche eine innere und eine äußere Kautschuklage aufweisen und eine dazwischen liegende Festigkeitsträgerschicht. WO 2017/092894 A1 offenbart Umlageschläuche mit einer Schutzschicht. DE 10 2018 214615 A1 offenbart Schläuche aus einer Schicht, bestehend aus einer Kautschukmischung, wobei die Kautschukmischung eine Verschnitt aus Chlorbutylkautschuk (CIIR) und EPDM sein kann.

Die Aufgabe der Erfindung bestand daher in der Bereitstellung eines Umlageschlauches, der insbesondere für die Verwendung bei SCR-Anwendungen geeignet ist und eine erhöhte Temperaturbelastung, insbesondere zwischen 140°C und bis zu 250°C, von außen gewährleistet.

Gleichzeitig soll der Umlageschlauch eine hohe Flexibilität, insbesondere durch ein verringertes Gewicht und eine geringere Wandstärke, aufweisen, um den immer enger werdenden Motorräumen gerecht zu werden. Zusätzlich soll der Mindestbiegeradius verringert werden.

Gelöst wird diese Aufgabe durch einen Umlageschlauch entsprechend Anspruch 1, bei dem eine Innenschicht einen Verschnitt aus Ethylen-Propylen-Dienkautschuk (EPDM) und Chlorbutylkautschuk (CIIR) enthält.

Überraschenderweise wurde gefunden, dass ein Umlageschlauch mit einer Innenschicht aus einem Verschnitt aus EPDM und CIIR sich durch eine erhöhte Lebensdauer bei erhöhten Temperaturen von größer 200°C auszeichnet.

Bevorzugt handelt es sich bei dem Verschnitt, welcher häufig auch als Blend bezeichnet wird, um ein Mengenverhältnis von 50 bis 90 phr EPDM und 50 bis 10 phr CIIR, besonders bevorzugt um 70 bis 90 phr EPDM und 30 bis 10 phr CIIR. Es versteht sich dabei von selbst, dass die Gesamtmenge an EPDM und CIIR immer 100 phr ergeben muss.

Erfindungsgemäß ist, wenn der Umlageschlauch aus wenigstens einer textilen Umlage als Außenschicht und wenigstens einer Innenschicht bestehend aus einer Kautschukmischung, enthaltend einen Verschnitt aus Ethylen-Propylen-Dienkautschuk (EPDM) und Chlorbutylkautschuk (CIIR) als einzige Kautschukkomponenten, besteht.

Als Festigkeitsträger für die Umlage können bevorzugt Polyphenylensulfid (PPS) und / oder Polyoxadiazol (POD) und / oder m-Aramid (m-AR) und / oder p-Aramid (p-AR) und / oder Polyimid (PI) und / oder Polyetheretherketon (PEEK) und / oder Polyethylen-2,6-naphthalat (PEN) und / oder Polyphenylen (PPP) und / oder Polyphenylenoxid (PPO) und / oder Polyphenylensulfid (PPS) und / oder Polyphenylenether (PPE) und / oder Polybenzoxazole (PBO) und / oder Kohlenstofffasern (CF) und / oder Metallfasern (MF) und / oder Glasfasern (GF) alleine oder in Kombination verwendet werden. Aufgrund der guten Temperaturbeständigkeit, Hydrolysebeständigkeit, Haftung, chemischen Beständigkiet unf Verarbeitbarkeit sind PPS und m-Aramid besonders bevorzugt.

Die Umlage wird als textiles Flächengebilde in Form von Geflecht, Cord, Gestrick, Gewirk, Gewebe, Vlies oder Gelege aufgebracht, wobei vorzugsweise die Aufbringung als Geflecht erfolgt. Die Umlageschicht kann dabei einlagig oder mehrlagig ausgebildet sein. Bevorzugt hat die Umlageschicht 1 bis 5 Lagen, besonders bevorzugt 1 bis 3 Lagen und ganz besonders bevorzugt 1 bis 2 Lagen.

Die Erfindung wird nun anhand eines Ausführungsbeispiels unter Bezugnahme auf Versuchsergebnisse erläutert.

In Tabelle 1 wird ein erfindungsgemäßer SCR-Umlageschlauch bestehend aus einer Innenschicht aus einem Verschnitt aus EPDM und CIIR und einer Umlage mit einem SCR-Einlageschlauch mit einer Innenschicht aus einem Verschnitt aus EPDM und CIIR und einer Außenschicht aus EPDM verglichen.

Es zeigt sich, dass der SCR-Einlageschlauch nach einer Alterung (Medium Wasser innen 85°C, Kammertemperatur Medium Luft außen 210°C, 1000h Alterung mit 3 bar Durchströmung) zerstört ist. Die Reißdehnung beträgt nur noch 65%.

Nach der Alterung von 1000h wurde der Berstdruck gemäß DIN 24312 bestimmt. Der SCR-Einlageschlauch hat hierbei einen Berstdruck von 50% vom Frischwert, während der SCR-Umlageschlauch einen Berstdruck von 100% vom Frischwert aufweist, d.h. kein Abbau stattgefunden hat.

**Tabelle 1**

| | SCR-Einlageschlauch | | | | SCR-Umlageschlauch | |
|---|---|---|---|---|---|---|
| | Innen EPDM/CIIR frisch | Außen EPDM frisch | Innen EPDM/CIIR n. Alterung | Außen EPDM n. Alterung | Innen EPDM/CIIR frisch | Innen EPDM/CIIR n. Alterung |
| Shorehärte gemäß DIN ISO 7619-1 [ShoreA] | 65 | 72 | 75 | 76 | 70 | 73 |
| Reißfestigkeit gemäß DIN 53504 [MPa] | 9,8 | 15,0 | 7,6 | 7,4 | 9,8 | 6,3 |
| Reißdehnung gemäß DIN 53504 [%] | 310 | 265 | 205 | 65 | 280 | 181 |
| Berstdruck des Schlauchs gemäß DIN 24312 [bar] | 130 | | 69 | | 184 | 181 |

## Patentansprüche

1. Mehrschichtiger Umlageschlauch bestehend aus wenigstens einer textilen Umlage als Außenschicht und wenigstens einer Innenschicht bestehend aus einer Kautschukmischung enthaltend einen Verschnitt aus Ethylen-Propylen-Dienkautschuk (EPDM) und Chlorbutylkautschuk (CIIR) als einzige Kautschukkomponenten.

2. Mehrschichtiger Umlageschlauch nach Anspruch 1, **dadurch gekennzeichnet, dass** der Verschnitt aus 50 bis 90 phr EPDM und 50 bis 10 phr CIIR besteht.

3. Mehrschichtiger Umlageschlauch nach Anspruch 2, **dadurch gekennzeichnet, dass** der Verschnitt aus 70 bis 90 phr EPDM und 30 bis 10 phr CIIR besteht.

4. Mehrschichtiger Umlageschlauch nach einem der Ansprüche 1 bis 3, **dadurch gekennzeichnet, dass** die textile Umlage aus Polyphenylensulfid (PPS) und / oder Polyoxadiazol (POD) und / oder Aramid (AR) und / oder Polyimid (PI) und / oder Polyetheretherketon (PEEK) und / oder Polyethylen-2,6-naphthalat (PEN) und / oder Polyphenylen (PPP) und / oder Polyphenylenoxid (PPO) und / oder Polyphenylenether (PPE) und / oder Polybenzoxazole (PBO) und / oder Kohlenstofffasern (CF) und / oder Metallfasern (MF) und / oder Glasfasern (GF)jeweils alleine oder in Kombination aufgebaut ist.

5. Mehrschichtiger Umlageschlauch nach einem der Ansprüche 1 bis 4, **dadurch gekennzeichnet, dass** der Umlageschlauch frei von weiteren Zwischenschichten und frei von eingebetteten Festigkeitsträgerschichten ist.

6. Verwendung eines mehrschichtigen Umlageschlauchs nach einem der Ansprüche 1 bis 5 als SCR-Umlageschlauch (SCR, selective catalytic reduction).

## Claims

1. A multi-layered hose consisting of at least one textile lining as an outer layer and at least one inner layer consisting of a rubber compound containing a blend of ethylene propylene diene monomer rubber (EPDM) and chlorobutyl rubber (CIIR) as the only rubber components.

2. The multi-layered hose according to claim 1, **characterized in that** the blend consists of 50 to 90 phr EPDM and 50 to 10 phr CIIR.

3. The multi-layered hose according to claim 2, **characterized in that** the blend consists of 70 to 90 phr EPDM and 30 to 10 phr CIIR.

4. The multilayer hose according to any one of claims 1 to 3, **characterized in that** the textile liner is composed of polyphenylene sulfide (PPS) and/or polyoxadiazole (POD) and/or aramid (AR) and/or polyimide (PI) and/or polyetheretherketone (PEEK) and/or polyethylene 2,6-naphthalate (PEN) and/or polyphenylene (PPP) and/or polyphenylene oxide (PPO) and/or polyphenylene ether (PPE) and/or polybenzoxazole (PBO) and/or carbon fibers (CF) and/or metal fibers (MF) and/or glass fibers (GF), either individually or in combination.

5. The multi-layered hose according to any one of claims 1 to 4, **characterized in that** the hose is free of additional intermediate layers and free of embedded reinforcement layers.

6. A use of a multi-layered hose according to any one of claims 1 to 5 as an SCR (selective catalytic reduction) hose.

## Revendications

1. Tuyau de prélèvement multicouche constitué d'au moins un revêtement textile comme couche extérieure et d'au moins une couche intérieure constituée d'un caoutchouc mélangé contenant un mélange de caoutchouc éthylène-propylène-diène (EPDM) et de caoutchouc chlorobutyle (CIIR) comme seuls constituants caoutchouc.

2. Tuyau de prélèvement multicouche selon la revendication 1, **caractérisé en ce que** le mélange est constitué de 50 à 90 phr d'EPDM et de 50 à 10 phr de CIIR.

3. Tuyau de prélèvement multicouche selon la revendication 2, **caractérisé en ce que** le mélange est constitué de 70 à 90 phr d'EPDM et de 30 à 10 phr de CIIR.

4. Tuyau de prélèvement multicouche selon l'une quelconque des revendications 1 à 3, **caractérisé en ce que** le revêtement textile est composé de sulfure de polyphénylène (PPS) et/ou de polyoxadiazole (POD) et/ou d'aramide (AR) et/ou de polyimide (PI) et/ou de polyétheréthercétone (PEEK) et/ou de polyéthylène-2,6-naphtalate (PEN) et/ou de polyphénylène (PPP) et/ou d'oxyde de polyphénylène (PPO) et/ou d'éther de polyphénylène (PPE) et/ou de polybenzoxazole (PBO) et/ou de fibres de carbone (CF) et/ou de fibres métalliques (MF) et/ou de fibres de verre (GF), respectivement seul ou en combinaison.

5. Tuyau de prélèvement multicouche selon l'une quelconque des revendications 1 à 4, **caractérisé en ce que** le tuyau de prélèvement est exempt de couches intermédiaires supplémentaires et exempt de couches de support de renforcement intégrées.

6. Utilisation d'un tuyau de prélèvement multicouche selon l'une quelconque des revendications 1 à 5 comme tuyau de prélèvement SCR (SCR, selective catalytic reduction - réduction catalytique sélective).
